# EUROPÄISCHE PATENTSCHRIFT

(11) **EP 0 850 565 B1**
(45) Veröffentlichungstag und Bekanntmachung des Hinweises auf die Patenterteilung: **27.11.2002**
(21) Anmeldenummer: 98103590.0
(22) Anmeldetag: 14.09.1991
(51) Int. Cl.: A01N 25/30

(54) **Synergistische herbizide Mittel**
Synergistic herbicidal agents
Agents herbicides synergiques

(30) Priorität: 15.09.1990 DE 4029304
(43) Veröffentlichungstag der Anmeldung: 01.07.1998
(62) Teilanmeldung aus: 91115631.3
(73) Patentinhaber: Bayer CropScience GmbH, 65929 Frankfurt/Main (DE)
(72) Erfinder: Bieringer, Hermann Dr., 65817 Eppstein (DE); Hacker, Erwin Dr., 65239 Hochheim (DE); Heinrich, Rudolf Dr., 65779 Kelkheim (DE); Hufe, Hans Philipp Dr., 65817 Eppstein (DE); Kocur, Jean Dr., 65719 Hofheim (DE)

(56) Entgegenhaltungen:
- EP-A- 0 336 151
- EP-A- 0 356 812
- DATABASE WPI Section Ch, Week 8705 Derwent Publications Ltd., London, GB; Class C01, AN 87-032875 XP002061340 & JP 61 289 004 A (KAO CORP) , 19.Dezember 1986

## Beschreibung

Die Erfindung betrifft das technische Gebiet der Pflanzenschutzmittel, insbesondere Wirkstoff-Tensid-Kombinationen, die über die grünen Pflanzenteile aufgenommen werden.

Es ist allgemein bekannt, daß manche Herbizide sowohl über Blätter als auch über Wurzeln in die Pflanzen gelangen und andere Herbizide selektiv praktisch nur über die Wurzeln oder nur über die Blätter aufgenommen werden. Die herbizide Wirksamkeit kann somit entscheidend davon abhängen, daß die Wirkstoffe rasch und möglichst vollständig durch das Blattgewebe in die Pflanzen eindringen können. Hierbei spielen Oberflächenaktive Substanzen eine besondere Rolle, denn sie können im Einzelfall die Benetzbarkeit erhöhen und als eine Art Gleitschiene wirken, auf der die Wirkstoffe in die Blätter penetrieren.

EP-A 0 356 812 beschreibt, daß Mischungen, enthaltend ein nicht-ionisches Tensid, ein anionisches Tensid, einen Ester einer langkettigen Fettsäure mit einem niederen Alkohol sowie einen Kohlenwasserstorf, die Wirkung von Pflanzenschutzmitteln verstärken können.

Es wurde nun gefunden, daß bei gemeinsamer Applikation von bestimmten Herbiziden mit Tensiden des Typs der Alkylpolyglykolethersulfate und deren Salzen, die Wirksamkeit der Herbizide überraschend stark erhöht wird.

Gegenstand der Erfindung ist die Verwendung von Tensiden aus der Gruppe der C₁₀-C₁₈-Alkylpolyglykolethersulfate und deren physiologisch verträglichen Salze als Wirkungsverstärker für blattwirksame selektive Herbizide aus der Gruppe Phenoxyphenoxy- und Heteroaryloxyphenoxypropionsäuren und deren Ester.

Die erfindungsgemäß zu verwendenden Tenside werden in der Regel zusammen mit dem bzw. den Herbiziden oder unmittelbar hintereinander auf die Pflanzen aufgebracht, vorzugsweise in Form einer wäßrigen Spritzbrühe, welche die Tenside und die Herbizide in wirksamen Mengen und gegebenenfalls weitere übliche Hilfsmittel enthält.

Die Konzentration der erfindungsgemäß zu verwendenden Tenside ist in einer wäßrigen Spritzbrühe in der Regel von 0,05 bis 2 Gew.-%, vorzugsweise 0,1 bis 1,0 Gew.-%, insbesondere 0,1 bis 0,3 Gew.-% Tensid, bezogen auf waschaktive Substanz, wobei dabei eine Wasseraufwandmenge von 200 bis 600 l/ha, insbesondere 300 bis 400 l/ha bevorzugt ist.

Als erfindungsgemäß einsetzbare Herbizide sind folgende blattwirksamen selektiven Herbizide geeignet:

Herbizide vom Typ der Phenoxyphenoxy-, Benzylphenoxyund Heteroaryloxy-phenoxycarbonsäure-(C₁-C₄)alkyl-, -(C₂-C₄)alkenyl- und -(C₃-C₄)alkinylester, wie 2-(4-(2,4-Dichlorphenoxy)-phenoxy)-propionsäuremethylester (Diclofop-methyl), 2-(4-(4-Brom-2-chlorphenoxy)-phenoxy)-propionsäuremethylester, 2-(4-(4-Trifluormethylphenoxy)-phenoxy)-propionsäuremethylester, 2-[4-(2-Fluor-4-trifluormethyl-phenoxy)-phenoxy]-propionsäuremethylester, 2-[4-(2-Fluor-4-bromphenoxy)-phenoxy]-propionsäuremethylester, 2-(4-(2-Chlor-4-trifluormethylphenoxy)-phenoxy)-propionsäuremethylester, 4-(4-4-Trifluormethylphenoxy)-phenoxy)-pent-2-en-säureethylester, 2-(4-(2,4-Dichlorbenzyl)-phenoxy)-propionsäuremethylester, 2-(4-(3,5-Dichlorpyridyl-2-oxy)-phenoxy)-propionsäureethylester, 2-(4-(3,5-Dichlorpyridyl-2-oxy)phenoxy)-propionsäurepropargylester, 2-[4-(5-Difluormethoxy-pyrid-2-yloxy)-phenoxy]-propionsäureethylester, 2-[4-(2-Chlor-4-trifluorpyrid-2-yloxy)-phenoxy]-propionsäuremethylester (Haloxyfop-methyl, Dowco 453), 2-[4-(4-Chlor-6-fluor-2-pyrid-1-yloxy)-phenoxy]-propionsäure-propargylester (CGA 184 927), (R,S)- und (R)-2-(4-(6-Chlorbenzoxazol-2-yl-oxy)-phenoxy)-propionsäureethylester (Fenoxaprop-ethyl bzw. Fenoxaprop-P-ethyl), 2-(4-(3-Chlor-5-trifluormethyl-2-pyridyloxy)-phenoxy)-propionsäuremethylester, (R,S)- und (R)-2-(4-(5-Trifluormethyl-2-pyridyloxy)-phenoxy)-propionsäurebutylester (Fluazifop-butyl bzw. Fluazifop-Pbutyl), 2-(4-(3-Fluor-5-chlorpyridyl-2-oxy)-phenoxy)-propionsäuremethylester, 2-(4-(3-Fluor-5-chlorpyridyl-2-oxy)-phenoxy)-propionsäurepropargylester, 2-(4-(6-Chlor-2-chinoxalyloxy)phenoxy)-propionsäure und deren Methyl- und Ethylester (Quizalofop bzw. Quizalofop-methyl und -ethyl), 2-(4-(6-Fluor-2-chinoxalyloxy)phenoxy)-propionsäuremethylester, 2-(4-(6-Chlor-2-chinolyloxy)-phenoxy)-propionsäuremethylester, 2-(4-(5-Chlor-3-fluorpyridin-2-yloxy)-phenoxy)-thiopropionsäure-5-methoxycarbonylmethylester, und entsprechende andere Ester und Amide wie 2-[4-(6-Chlor-2-chinoxalyloxy)-phenoxy]-propionsäure-2-(propyliden-2-aminooxy)-ethylester (Propaquizafop, RO-17-3664) (2R)-2-[4-(6-Chlorchinoxal-2-yloxy)-phenoxy]-propionsäure-(±)-tetrahydrofurfurylester (UBI-C 4874), N-[2-[4-(3,5-Dichlorpyrid-2-yloxy)-phenoxy]-propionyl]-isoxazolidin (Isoxapyrifop); vorzugsweise Herbizide vom Typ der Phenoxyphenoxy- und Heteroaryloxyphenoxypropionsäure und deren Ester,

Neben den genannten selektiven Herbiziden sind auch deren angereicherte oder reine optische Formen, falls diese existieren und herbizid wirksam sind, sowie Herbizide analoger Struktur einsetzbar.

Die erfindungsgemäß einsetzbaren Herbizide sind allgemein bekannt. Zum großen Teil sind Sie in "The Pesticide Mannual", 8th Edition, British Crop Protection Council 1987 und in "Farm Chemicals Handbook '90", Meister Publishing Company, Willoughby, Ohio USA 1990 und dort zitierter Literatur beschrieben.

Einige der bevorzugten Herbizide sowie in den vorstehenden Literaturstellen nicht beschriebenen Herbizide sind im folgenden aufgeführt:

Diclofop-methyl, d.h. 2-[4-(2,4-Dichlorphenoxy)-phenoxy]-propionsäuremethylester, ist ein bekannter herbizider Wirkstoff, der zur Bekämpfung von einjährigen Gräsern in Getreide eingesetzt wird (s. "The Pesticide Manual", 8th Ed. 1987, Brit. Crop Protection Council, S. 272).

UBI-C4874 gehört zur Gruppe der heterocyclischen Phenoxy-Gräserherbizide und wird in zahlreichen dikotylen Kulturpflanzen zur Bekämpfung ein- und mehrjähriger Gräser eingesetzt. Es hat die chemische Bezeichnung (2R)-2-[4-(6-Chlorchinoxalin-2-yloxy)-phenoxy]-propionsäure-(±)-tetrahydrofurfurylester (siehe A.R. Bell et al., Brighton Crop. Protection Conference-Weeds-1989, Seiten 65-70).

Fenoxaprop-ethyl, d.h. 2-[4-(6-Chlorbenzoxazol-2-yloxy)-phenoxy]-propionsäure-ethylester ist ein bekanntes Herbizid zur Bekämpfung von Gräsern in landwirtschaftlichen Kulturen wie Sojabohne, Zuckerrübe, Kartoffel, Reis u.a.. In DE-A-2640730 wurde es erstmals 1976 beschrieben; siehe auch "The Pesticide Manual" 8th Edition, British Crop Protection Council 1987, Seite 379. Es wird als Racemat eingesetzt und neuerdings auch als D(+)-Isomer (Commonname: Fenoxaprop-P-ethyl) vermarktet (siehe H.P. Huff et al., Brighton Crop Protection Conference-Weeds-1989, S. 717-722).
Fenoxaprop-ethyl wird auch in Verbindung mit dem Safener Fenchlorazol-ethyl in Getreidekulturen wie Roggen und Weizen selektiv gegen Schadpflanzen eingesetzt (siehe H. Bieringer et al., Brighton Crop Protection Conference-Weeds-1989, Seiten 77-82 und H. Köcher et al., ebenda Seiten 495-500).

RO-17-3664 (Propaquizafop) ist aus British Crop Protection Conf.-Weeds 1987, s. 55 ff bekannt.
Isoxapyrifop ist aus Brighton Crop Prot. Conf.-Weeds - 1989, S. 59 bekannt.
CGA 184 927 ist aus Brighton Crop Prot. Conf.-Weeds - 1989, S. 71 ff bekannt.

Als Herbizide werden vorzugsweise Diclofop-methyl, UBI-C4874, Fenoxaprop und dessen Ester, insbesondere Fenoxaprop-ethyl oder Fenoxaprop-P-ethyl, Phenmedipham, sowie Quizalofop-ethyl ausgewählt.

Die oberflächenaktiven Substanzen vom Typ der C₁₀-C₁₈-Alkylpolyglykolethersulfate werden vorzugsweise in Form ihrer Alkalisalze, wie Natrium- oder Kaliumsalze, und/oder Ammoniumsalze, aber auch als Magnesiumsalze verwendet, wobei vorzugsweise 2 bis 5 Ethylenoxyeinheiten im Polyglykolteil enthalten sind. Besonders bevorzugt ist z.B. C₁₂/C₁₄-Fettalkoholdiglykolethersulfat-Natrium (Handelsname ®Genapol LRO, Hoechst AG); diese Substanz wird im folgenden Netzmittel A genannt.

Das Gewichtsverhältnis von Herbizid zu Tensid kann in einem weiten Bereich variieren und hängt von der Wirksamkeit des Herbizids sowie der Konzentration in der Spritzbrühe ab. In der Regel ist es im Bereich von 10:1 bis 1:200, vorzugsweise 4:1 bis 1:100.

Es ist bereits bekannt, Netzmittel vom Typ der C₁₂/C₁₄-Fettalkoholdiglykolethersulfate zur Wirkungsverstärkung von Glufosinate einzusetzen; vgl. EP-A-048436 (US-A-4,400,196), EP-A-336151 sowie Proc. EWRS Symp. Factors Affecting Herbicidal Activity and Selectivity, 227-232, 1988).

Es wurde in der nicht vorveröffentlichten Europäischen Patentanmeldung Nr. 90 112 739.9 bereits vorgeschlagen, wäßrige Zubereitungen von Herbiziden aus der Gruppe Glufosinate, Fenoxaprop-P-ethyl, Isoproturon und Diclofopmethyl mit Alkylpolyglykolethersulfat-Na (®Genapol LRO, Hoechst AG) und mit Entschäumern aus der Gruppe der Perfluor-(C₆-C₈)-alkylphosphinsäuren und/oder -phosphonsäuren herzustellen. Speziell wurde als Entschäumer ein Salz aus einem Talgfettaminethoxylat mit 15 EO, d.h. 15 Ethylenoxyeinheiten, (®Genamin T 150, Hoechst AG) und einem Entschäumer des genannten Typs, ®Fluowett PP, Hoechst AG verwendet. Gemäß Anspruch 1 offenbart diese Europäische Patentanmeldung wäßrige Zubereitungen von Herbiziden, welche in Kombination mit einem Sulfatgruppenhaltigen Tensid (Netzmittel) ein Tensid (Entschäumer) aus der Gruppe der Perfluor-(C₆-C₁₈)alkylphosphinsäuren und/oder Perfluor-(C₆-C₁₈)alkylphosphonsäuren und/oder deren Salze enthalten.

In der Deutschen Patentanmeldung P 39 38 564.7 wurde bereits vorgeschlagen, ein wasserdispergierbares Granulat von Fenoxaprop-ethyl oder Fenoxaprop-P-ethyl herzustellen, das die 2- bis 4-fache Menge, bezogen auf Herbizid, Genapol LRO als Netzmittel sowie einen Entschäumer auf Silikonbasis, ein Dispergiermittel auf Basis eines Kresol-Formaldehyd-Kondensationsprodukts und ein Aluminiumsilikat enthält.

Gegenstand der Erfindung sind somit auch herbizide Mittel mit einem Gehalt an.
a) Herbiziden aus der Gruppe der blattwirksamen selektiven Herbizide Phenoxyphenoxy- und Heteroaryloxyphenoxypropionsäuren und deren Ester, und
b) Tensiden aus der Gruppe der C₁₀-C₁₈-Alkylpolyglykolethersulfate und deren physiologisch verträglichen Salzen,
ausgenommen wäßrige Zubereitungen von Herbiziden welche in Kombination mit einem Sulfatgruppenhaltigen Tensid (Netzmittel) ein Tensid (Entschäumer) aus der Gruppe der Perfluor - (C₆-C₁₈)-alkylphosphinsäuren und/oder Perfluor - (C₆-C₁₈)-phosphonsäuren und/oder deren Salze enthalten.

Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen oder Emulsionen, Suspensionskonzentrate (SC), Dispersionen auf Öl- oder Wasserbasis, ölmischbare Lösungen (OL) Suspoemulsionen, Kapselsuspensionen (CS), Stäubemittel (DP), Beizmittel, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 2nd Ed. 1972-73; K. Martens, "Spray Drying Handbook, 3rd Ed. 1979, G. Goodwin Ltd. London.

Die notwendigen zusätzlichen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y.; Marsden, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Für weitere Informationen zur Formulierung von Pflanzenschutzmitteln siehe z.B. G.C. Klingmann, "Weed Control as a Science", John Wiley and Sons, Inc., New York, 1961, Seiten 81-96 und J.D. Freyer, s.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gewichtsprozent, insbesondere 0,1 bis 95 Gew.-%, Herbizid-Wirkstoff.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 80 Gew.-% betragen. Staubförmige Formulierungen enthalten meistens 1 bis 20 Gew.-% an Wirkstoff, versprühbare Lösungen etwa 0,2 bis 20 Gew.-%. Bei Granulaten hängt der Wirkstoffgehalt zum Teil davon ab, ob die wirksame Verbindung flüssig oder fest vorliegt. Meist liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Vorzugsweise enthalten die herbiziden Mittel neben den erfindungsgemäßen Bestandteilen a) und b) noch Wasser und gegebenenfalls organische Lösungsmittel und werden in Form einer wäßrigen konzentrierten Dispersion oder Emulsion formuliert oder als Tankmix in Form einer verdünnten Dispersion, Emulsion oder Lösung mit einem Verdünnungsgrad bis zu dem der gebrauchsfertigen Spritzbrühe hergestellt. In konzentrierten wäßrigen Dispersionen oder Emulsionen ist das Gew.-Verhältnis von Herbizid a), insbesondere Fenoxaprop-ethyl oder Fenoxaprop-P-ethyl, zu Tensid b) vorzugsweise von 1:1,5 bis 1:4.

Auch Mischungen oder Mischformulierungen mit anderen Wirkstoffen, wie z.B. Insektiziden, Akariziden, Herbiziden, Safenern, Düngemitteln, Wachstumsregulatoren oder Fungiziden sind gegebenenfalls möglich. Besonders bevorzugt ist eine als Tankmix hergestelltes herbizides Mittel, das zur Anwendung bevorzugte Mengen an Herbizid und Tensid enthält.

Zur Anwendung werden in handelsüblicher Form vorliegende konzentrierte Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Sprüh- und Adsorptionsgranulate, versprühbare Lösungen sowie als Tankmix hergestellte Spritzbrühen werden vor der Anwendung üblicherweise nicht mehr mit weiteren inerten Stoffen verdünnt. Allerdings kann es vorteilhaft oder notwendig sein, den Spritzbrühen weitere Mengen an erfindungsgemäßen Tensiden b) und/oder andere übliche Hilfsmittel, insbesondere selbstemulgiernede Öle oder Paraffinöle zuzugeben. Denn bei einigen der konzentrierten Formulierungen ist der Anteil an erfindungsgemäßen Tensiden nicht beliebig zu erhöhen, ohne die Stabilität der Formulierung zu beeinträchtigen.

Mit den äußeren Bedingungen wie Temperatur, Feuchtigkeit, der Art des verwendeten Herbizids, u.a. variiert die erforderliche Aufwandmenge der Wirkstoffe. Sie kann innerhalb weiter Grenzen schwanken, z.B. zwischen 0,001 und 10,0 kg/ha oder mehr Aktivsubstanz, vorzugsweise liegt sie jedoch zwischen 0,005 und 5 kg/ha.

Die auffallende Wirkungsverbesserung durch die erfindungsgemäß eingesetzten Tenside, wie z.B. Netzmittel A geht weit über das hinaus, was beispielsweise andere herkömmliche Netzmittel leisten und kann deshalb als in besonderem Maße synergistisch wirkungsverstärkend bezeichnet werden. Dies umsomehr, als die erfindungsgemäßen Tenside für sich allein keine eigentliche herbizide Wirksamkeit haben und die Pflanzen kaum äußerlich sichtbar schädigen - gelegentlich kommt es auf der Blattspreite junger Pflanzen zu leichten Braunverfärbungen (sogenannten "Berostungen"), die sich jedoch sehr rascn innerhalb weniger Tage wieder verwachsen und dann nicht mehr zu sehen sind.

Einige empfindliche junge Unkräuter erleiden durch Netzmittel A allein einen leichten Wachstumsschock, d.h. sie bleiben über 1-2 Wochen im Wachstum gegenüber Kontrollpflanzen zurück, in der folgenden Zeit erholen sich die Pflanzen jedoch wieder und wachsen gesund weiter.

Bei gemeinsamer Ausbringung mit den herbiziden Wirkstoffen bewirken die erfindungsgemäßen Tenside jedoch eine ungewöhnlich starke Verbesserung der Wirkung, indem die Wirkstoffe nicht nur schneller, sondern auch vollständiger aufgenommen werden und ihre herbizide Effektivität wesentlich besser entfalten können.

Darüberhinaus wird die Wirksamkeit der applizierten Herbizide wesentlich weniger durch Wettereinflüsse, wie z.B. Regen, beeinträchtigt.

Gegenstand der Erfindung ist deshalb auch ein Verfahren zur Bekämpfung von Schadpflanzen, vorzugsweise zur selektiven Bekämpfung von Schadpflanzen in Nutzpflanzenkulturen, dadurch gekennzeichnet, daß man eine herbizid wirksame Menge der genannten Herbizide a) in Kombination mit mindestens einem der genannten Tenside b) auf die Pflanzen oder deren Anbaufläche appliziert.

Als Schadpflanzen sind bevorzugt die von den jeweiligen Herbiziden schon ohne Tensidzusatz zu bekämpfenden Schadpflanzen gemeint.

Der Anteil am Tensid b) in konzentrierten Formulierungen kann naturgemäß nicht beliebig erhöht werden, ohne die Stabilität der Formulierung nicht zu beeinträchtigen. Das Gewichtsverhältnis Herbizid:Tensid ist in den konzentrierten Formulierungen vorzugsweise von 10:1 bis 1:20.

Das Gewichtsverhältnis Herbizid:Tensid ist bei der Applikation vorzugsweise im Bereich 10:1 bis 1:200, insbesondere 4:1 bis 1:100 in Abhängigkeit von der Wirksamkeit des jeweiligen Herbizids. Die Konzentration an erfindungsgemäßen Tensid b) ist vorzugsweise bei 0,05 bis 2 Gew.-%, vorzugsweise 0,1 bis 1,0 Gew.-%, insbesondere 0,1 bis 0,3 Gew.-% waschaktiver Substanz in der Spritzbrühe bei einer Wasseraufwandmenge von 200 bis 600 l/ha. Die Dosis ist insbesondere bevorzugt von 300 bis 900 g waschaktiver Substanz des Tensids pro ha Anbaufläche.

### A) Biologisches Beispiele

### Beispiel A1

Verschiedene wirtschaftlich wichtige Ungräser wurden in Töpfen von 13 cm Durchmesser in sandiger Lehmerde im Gewächshaus angezogen und nach Erreichen von Größe und Wachstumsstadien, wie sie in Tabelle 1 angegeben sind, mit dem Herbizid Fenoxaprop-P-ethyl allein und in Kombination mit Netzmittel A behandelt. Dabei wurde die mit Wasser zur Spritzbrühe verdünnte Formulierung (s.u.) des Herbizids bzw. des Tankmixes aus Herbizid-Formulierung, Netzmittel und Wasser mit einer Wasseraufwandmenge von 300 l/ha ausgebracht. Als zusätzlicher Vergleich wurde das Herbizid in getrennten analogen Versuchen in Kombination mit dem herkömmlichen Netzmittel Isotridecanolhexanethylenglykolether (®Genapol X060, Netzmittel B) appliziert.

**Tabelle 1:**

| Anzuchtbedingungen und Wachstumsstadien der Versuchspflanzen | | | |
|---|---|---|---|
| Pflanzenart | Gewächshaustemperatur tags/nachts | Größe (cm) | Wuchsstadium |
| Alopecurus myosuroides (ALOMY) | 20/14°C | 23-25 | Mitte Bestockung |
| | | | |
| Avena fatua (AVEFA) | 20/14°C | 31-33 | Anfang Schossen |
| | | | |
| Sorghum halepense (SORHA) | 24/18°C | 18-32 | 6-Blatt-Stadium |

4 Wochen nach Applikation der Herbizide wurden die behandelten Pflanzen, die im Gewächshaus unter jeweils gleichen Temperaturbedingungen weiterkultiviert wurden, visuell bonitiert, indem die prozentuale Schädigung des pflanzlichen Wachstums festgestellt wurde.

Diese Ergebnisse sind in der folgenden Tabelle 2 zusammengestellt. Daraus ist ersichtlich, daß das Netzmittel A die herbizide Wirksamkeit des Herbizids Fenoxaprop-P-ethyl, das in Form zweier herkömmlicher Formulierungen eingesetzt wurde, ganz erheblich steigert, während das herkömmliche Netzmittel B dies nicht in gleichem Maße vermag.

**Tabelle 2:**

| Herbizide Schädigung der Versuchspflanzen in % | | | | |
|---|---|---|---|---|
| Wirkstoff/Tensid | g AS/ha | AVEFA | ALOMY | SORHA |
| H₁ | 100 | 100 | 93 | 100 |
| | 50 | 99 | 75 | 99 |
| | 25 | 55 | 50 | 94 |
| | 12 | 15 | 20 | 50 |
| | 6 | - | - | 10 |
| | | | | |
| H₁ + Netzmittel A^{*)} | 100+600 | 100 | 99 | 100 |
| | 50+600 | 100 | 95 | 100 |
| | 25+600 | 97 | 75 | 100 |
| | 12+600 | 94 | 55 | 100 |
| | 6+600 | - | - | 99 |
| | | | | |
| H₁ + Netzmittel B^{*)} | 100+600 | 99 | 93 | 100 |
| | 50+600 | 99 | 75 | 100 |
| | 25+600 | 93 | 60 | 98 |
| | 12+600 | 45 | 35 | 88 |
| | 6+600 | - | - | 45 |
| | | | | |
| H₂ | 100 | 100 | 97 | 100 |
| | 50 | 99 | 85 | 100 |
| | 25 | 83 | 45 | 99 |
| | 12 | 15 | 25 | 90 |
| | 6 | - | - | 60 |
| | | | | |
| H₂ + Netzmittel A^{*)} | 100+600 | 100 | 99 | 100 |
| | 50+600 | 100 | 97 | 100 |
| | 25+600 | 99 | 88 | 100 |
| | 12+600 | 99 | 83 | 100 |
| | 6+600 | - | - | 99 |
| Netzmittel A^{*)} | 600 | 0 | 0 | 0 |
| Netzmittel B^{*)} | 600 | 0 | 0 | 0 |

| | | | | |
|---|---|---|---|---|
| Abkürzungen zu Tabelle 2 AS = bezogen auf aktive Substanz (Herbizid) bzw. waschaktive Substanz (Netzmittel) H₁ = Fenoxaprop-P-ethyl, formuliert als EW 7,5 % (konzentrierte Emulsion) H₂ = Fenoxaprop-P-ethyl, formuliert als EC 9 % (Emulsionskonzentrat) *) = Netzmittel wurden in einer Konzentration von jeweils 0,2 Gew.-% waschaktiver Substanz im Spritzwasser bei einer Wasseraufwandmenge von 300 l/ha eingesetzt. Netzmittel A = C₁₂/C₁₄-Fettalkoholdiglykolethersulfat-Na (®Genapol LRO, 28 %ige wäßrige Lösung) Netzmittel B = Isotridecanolpolyglykolether mit 6 EO, (®Genapol X060) | | | | |

### Beispiel A2

Weizen (TRZAS) und die im Getreidebau vorkommenden Schadgräser Flughafer (AVEFA) und Ackerfuchsschwanz (ALOMY) wurden im Gewächshaus bei Temperaturen von 18°C/12°C bis zum Stadium Mitte der Bestockung entsprechend einer Größe von 24-28 cm angezogen und mit den erfindungsgemäßen Präparaten behandelt.

Als Herbizid wurde Fenoxaprop-P-ethyl im Verhältnis 2:1 zusammen mit dem Safener Fenchlorazol-ethyl eingesetzt (H₃).

Die Applikation und Bonitierung erfolgte wie unter Beispiel A1 beschrieben. 4 Wochen nach der Applikation wurden die in folgender Tabelle 3 zusammengestellten herbiziden Aktivitäten gemessen.

**Tabelle 3:**

| Bekämpfung von Schadgräsern in Weizen | | | | |
|---|---|---|---|---|
| Wirkstoff/Tensid | g AS/ha | TRZAS | AVEFA | ALOMY |
| H₃ | 100 | 0 | 99 | 90 |
| | 50 | 0 | 85 | 80 |
| | 25 | 0 | 60 | 35 |
| | 12 | 0 | 10 | 5 |
| | | | | |
| H₃ + Netzmittel A | 100+750 | 0 | 99 | 98 |
| | 50+750 | 0 | 98 | 92 |
| | 25+750 | 0 | 97 | 88 |
| | 12+750 | 0 | 95 | 75 |
| | | | | |
| H₃ + Netzmittel B | 100+750 | 0 | 99 | 95 |
| | 50+750 | 0 | 97 | 88 |
| | 25+750 | 0 | 90 | 70 |
| | 12+750 | 0 | 60 | 25 |
| Netzmittel A | 750 | 0 | 0 | 0 |
| Netzmittel B | 750 | 0 | 0 | 0 |
| Abkürzungen: AS = aktive bzw. waschaktive Substanz H₃ = Fenoxaprop-P-ethyl/Fenchlorazol (2:1) als EW 7,5 % (7,5 %ige wäßrige Emulsion) Netzmittel A und B sind wie in Tabelle 1 definiert und wurden mit 0,25 Gew.-% waschaktiver Substanz im Spritzwasser bei 300 l/ha Wasseraufwandmenge eingesetzt. | | | | |

Die Ergebnisse zeigen, daß Netzmittel A die Wirksamkeit des Herbizids H₃ formuliert als EW 7,5 % bei Zugabe von nur 0,25 % Netzmittel A zur Spritzbrühe wesentlich erhöht. Das herkömmliche Netzmittel ist nicht in der Lage eine gleiche synergistische Wirkung hervorzurufen.

### Abkürzungen:

AVEFA = Avena fatua
STEME = Stellaria media
MATCH = Matricaria chamomilla
Nicosulfuron WG 75 = Nicosulfuron als 75 %iges Granulat
Nicosulfuron SC 04 = Nicosulfuron als 4 %iges Suspensionskonzentrat
Netzmittel = Netzmittel A wie nach Tabelle 1

### Beispiel A3

Analog A1 wurde die Wirkung von UBI-C4874 im Vergleich zur Kombination des Herbizids mit - Netzmittel A getestet. Das Herbizid war als Emulsionskonzentrat EC 120 formuliert und wurde mit 300 l pro ha Wasseraufwandmenge auf die Pflanzen im 3- bis 4-Blattstadium (beginnende Bestockung) appliziert. Die Bonitierung erfolgte 2 bis 3 Wochen nach Applikation. Die Ergebnisse sind in Tabelle 5 zusammengefaßt:

**Tabelle 5:**

| Wirkungssteigerung von UBI-C4874 | | | | | |
|---|---|---|---|---|---|
| | % Wirkung nach 14-21 Tagen auf | | | | |
| | g AS/ha | ECHCO | ELEAF | SORVE | Sojabohne |
| C 4874 (als EC 120) | 60 | 50 | 96 | 43 | 0 |
| | 40 | 17 | 55 | 7 | 0 |
| | 30 | 10 | 35 | 0 | 0 |
| C 4874 + Netzmittel A | 40+900 | 99 | 99 | 100 | 0 |
| Netzmittel A | 900 | 0 | 0 | 0 | 0 |
| Abkürzungen: ECHCO = Echinochloa colonun ELEAF = Eleusine africana SORVE = Sorghum verticiliflorum EC 120 = 12 %iges emulgierbares Konzentrat Netzmittel A = siehe Tabelle 1; die Konzentration in der Spritzbrühe war 0,3 Gew.-%. | | | | | |

### Beispiel A4

Analog Beispiel A12 wurde in einem Felderversuch Quizalofop-ethyl, das als 10 %iges emulgierbares Konzentrat dem Tankmix zugeführt wurde, und Netzmittel A mit einer Wasseraufwandmenge von 300 l/ha gegen Hordeum vulgare (HORVU) im Stadium anfangender Schossen und Setaria viridis (SETVI) im Anfang der Bestockung appliziert. Hordeum vulgare ist hierbei nicht die Kulturgerste, sondern die als Ungras spontan auftretende Gerste ("Volunteer Barley"). Die Ergebnisse sind in Tabelle 15 zusammengestellt.

**Tabelle 15**

| | Dosis | % Wirkung gegen | |
|---|---|---|---|
| Mittel | [gAS/ha] | HORVU | SETVI |
| Quizalofop-ethyl | 50 | 75 | 48 |
| | 75 | 87 | - |
| | 100 | 88 | - |
| Quizalofop-ethyl | 50 + 140 | 87 | 95 |
| + Netzmittel A | | | |
| " | 75 + 84 | 89 | - |
| " | 75 + 250 | 91 | - |
| " | 75 + 420 | 84 | - |

Im folgenden werden Beispiele für erfindungsgemäße Formulierungen gegeben, ohne daß damit die Art der möglichen erfindungsgemäßen Formulierungen begrenzt wird.

### B) Formulierungsbeispiele

### Beispiel B1 (EW-Formulierung)

9,0 Gew.-% Fenoxaprop-P-ethyl werden in 35,0 Gew.-% eines Aromaten-Gemisches (Siedebreich 219°C-282°C) gelöst und mit 4,0 Gew.-% Fettsäurepolyglykolester (mit 40 EO) versetzt. Dieses Gemisch setzt man bei Raumtemperatur langsam unter Rühren zu 30,0 Gew.-% einer wäßrigen Lösung des Kaliumsalzes eines phosphorylierten Ethylenoxidpropylenoxid-ethylenoxid-Blockpolymerisates und rührt, bis die Emulsion homogen ist. Dann setzt man unter weiterem Rühren 15,0 Gew.-% des Natriumsalzes eines Alkyl-polyglykolethersulfates (Netzmittel A) und danach 7,0 Gew.-% Glycerin zu und läßt die entstandene weiße Emulsion noch 15 Minuten nachrühren.

### (Anmerkung: EO = Ethylenoxyeinheiten -CH₂CH₂O-)

### Beispiel B2 (EW-Formulierung)

6,0 Gew.-% Fenoxaprop-P-ethyl und 3,0 Gew.-% Fenchlorazol-ethyl werden in 40 Gew.-% eines Aromaten-Gemisches (Siedebereich 219°C-282°C) gelöst und mit 4,0 Gew.-% Fettsäurepolyglykolester (mit 40 EO) versetzt. Dieses Gemisch setzt man bei Raumtemperatur langsam unter Rühren zu 30,0 Gew.-% einer wäßrigen Lösung des Natriumsalzes eines phosphorylierten Ethylenoxid-propylenoxid-ethylenoxid-Blockpolymerisates und rührt, bis die Emulsion homogen ist. Dann setzt man unter weiterem Rühren 12,0 Gew.-% des Natriumsalzes eines Alkyl-polyglykol-ethersulfates (Netzmittel A) und danach 5,0 Gew.-% Propylenglykol zu und läßt die entstandene weiße Emulsion noch ca. 15 Minuten nachrühren.

## Patentansprüche

1. Verwendung von Tensiden aus der Gruppe der C₁₀-C₁₈-Alkylpolyglykolethersulfate und deren physiologisch verträglichen Salze als Wirkungsverstärker für blattwirksame selektive Herbizide aus der Gruppe Phenoxyphenoxy- und Heteroarylphenoxypropionsäuren und deren Ester.

2. Verwendung nach Anspruch 1, **dadurch gekennzeichnet, daß** eine wirksame Menge eines der Herbizide zusammen mit einem der Tenside auf Schadpflanzen oder deren Anbaufläche appliziert wird und das Gewichtsverhältnis von Herbizid zu Tensid 10:1 bis 1:200 beträgt.

3. Verwendung nach Anspruch 1 oder 2, **dadurch gekennzeichnet, daß** Herbizid und Tensid gemeinsam in Form einer wäßrigen Spritzbrühe ausgebracht werden und die Konzentration an Tensid 0,05 bis 2 Gew.-%. bezogen auf die Spritzbrühe, beträgt.

4. Herbizide Mittel mit einem Gehalt an
a) blattwirksamen selektiven Herbiziden aus der Gruppe Phenoxyphenoxy- und Heteroaryloxyphenoxypropionsäuren und deren Ester, und
b) Tensiden aus der Gruppe der C₁₀-C₁₈-Alkylpolyglykolethersulfate und deren physiologisch verträglichen Salzen, ausgenommen wäßrige Zubereitungen von Herbiziden welche in Kombination mit einem sulfatgruppenhaltigen Tensid (Netzmittel) ein Tensid (Entschäumer) aus der Gruppe der Perfluor-(C₁₀-C₁₈)-alkylphosphinsäuren und/oder Perfluor-(C₁₀-C₁₈)-phosphonsäuren und/oder deren Salze enthalten.

5. Mittel nach Anspruch 4, **dadurch gekennzeichnet, daß** das Gewichtsverhältnis von Herbizid zu Tensid 10:1 bis 1:200 ist.

6. Mittel nach Anspruch 4 oder 5, **dadurch gekennzeichnet, daß** die Konzentration an Tensid in einer wäßrigen Spritzbrühe 0,05 bis 2 Gew.-% waschaktive Substanz beträgt.

7. Verfahren zur Bekämpfung von Schadpflanzen, **dadurch gekennzeichnet, daß** man eine herbizid wirksame Menge einer der in Anspruch 1 definierten Kombination aus Herbizid und Tensid auf die Pflanzen oder deren Anbaufläche appliziert.

8. Verfahren nach Anspruch 7, **dadurch gekennzeichnet, daß** das Gewichtsverhältnis von Herbizid zu Tensid 10:1 bis 1:200 beträgt.

9. Verfahren nach Anspruch 7 oder 8, **dadurch gekennzeichnet, daß** die Applikation mittels wäßriger Spritzbrühe erfolgt, in der die Konzentration an Tensid 0,05 bis 2 Gew.-% beträgt.

10. Verfahren nach einem oder mehreren der Ansprüche 7 bis 9, **dadurch gekennzeichnet, daß** die Dosis an Tensid 600 bis 900 g waschaktiver Substanz pro Hektar Anbaufläche beträgt.

11. Verfahren nach einem oder mehreren der Ansprüche 7 bis 10, **dadurch gekennzeichnet, daß** die Schadpflanzen selektiv in Nutzpflanzenkulturen bekämpft werden.

## Claims

1. The use of surfactants from the group comprising the C₁₀-C₁₈-alkyl polyglycol ether sulfates and their physiologically acceptable salts as synergists for leaf-acting selective herbicides from the group comprising phenoxyphenoxy- and heteroaryloxyphenoxypropionic acids and their esters.

2. The use as claimed in claim 1, which comprises applying, to harmful plants or the area on which they are grown, an effective amount of one of the herbicides together with one of the surfactants, where the ratio by weight of herbicide to surfactant is 10:1 to 1:200.

3. The use as claimed in claim 1 or 2, which comprises applying herbicide and surfactant together in the form of an aqueous spray mixture, where the concentration of surfactant is 0.05 to 2 % by weight relative to the spray mixture.

4. A herbicidal agent which contains
a) leaf-acting selective herbicides from the group comprising phenoxyphenoxy- and heteroaryloxyphenoxypropionic acids and their esters, and
b) surfactants from the group comprising the C₁₀-C₁₈-alkyl polyglycol ether sulfates and their physiologically acceptable salts, with the exception of aqueous preparations of herbicides which comprise, in combination with a surfactant (wetting agent) that contains sulfate groups, a surfactant (defoamer) from the group comprising perfluoro-(C₁₀-C₁₈)-alkylphosphinic acids and/or perfluoro-(C₁₀-C₁₈)-phosphonic acids and/or their salts.

5. An agent as claimed in claim 4, wherein the ratio by weight of herbicide to surfactant is 10:1 to 1:200.

6. An agent as claimed in claim 4 or 5, wherein the concentration of surfactant in an aqueous spray mixture is 0.05 to 2 % by weight of detergent.

7. A method of controlling harmful plants, which comprises applying, to the plants or the area on which they are grown, a herbicidally effective amount of a combination of herbicide and surfactant as defined in claim 1.

8. The method as claimed in claim 7, wherein the ratio by weight of herbicide to surfactant is 10:1 to 1:200.

9. The method as claimed in claim 7 or 8, wherein the application is carried out by means of an aqueous spray mixture in which the concentration of surfactant is 0.05 to 2 % by weight.

10. The method as claimed in one or more of claims 7 to 9, wherein the dosage rate of surfactant is 600 to 900 g of detergent per hectare of area under cultivation.

11. The method as claimed in one or more of claims 7 to 10, wherein the harmful plants are controlled selectively in crops of useful plants.

## Revendications

1. Utilisation d'agents de surface pris dans le groupe des éthersulfates d'(alkyl en C₁₀-C₁₈)-polyglycols et de leurs sels tolérés du point de vue physiologique, en tant qu'agents renforçant l'effet des herbicides foliaires sélectifs pris dans le groupe des acides phénoxyphénoxy- et hétéroarylphénoxypropioniques et de leurs esters.

2. Utilisation selon la revendication 1, **caractérisée en ce qu'**on applique une quantité efficace d'un des herbicides conjointement avec un des agents de surface à des plantes adventices ou au sol cultivable et que le rapport pondéral de l'herbicide à l'agent de surface est de 10:1 à 1:200.

3. Utilisation selon la revendication 1 ou 2, **caractérisée en ce qu'**on applique l'herbicide et l'agent de surface conjointement sous forme d'une bouillie aqueuse et la concentration en agent de surface est de 0,05 à 2 % en poids, par rapport à la bouillie.

4. Agents herbicides ayant une teneur en
a) herbicides sélectifs foliaires pris dans le groupe comprenant des acides phénoxyphénoxy- et hétéroaryloxyphénoxypropioniques et leurs esters,
b) agents de surface pris dans le groupe des éthersulfates d'(alkyl en C₁₀-C₁₈)polyglycols et leurs sels tolérés du point de vue physiologique, à l'exception de préparations aqueuses d'herbicides, lesquelles contiennent en combinaison avec un agent de surface présentant des groupes sulfates (agent mouillant), un agent de surface (anti-mousse) pris dans le groupe comprenant des acides perfluoro(alkyl en C₆-C₁₈)-phosphiniques et/ou perfluoro(alkyl en C₆-C₁₈)-phosphoniques et/ou leurs sels.

5. Agents selon la revendication 4, **caractérisés en ce que** le rapport pondéral de l'herbicide à l'agent de surface est de 10:1 à 1:200.

6. Agents selon la revendication 4 ou 5, **caractérisés en ce que** la concentration en agent de surface dans une bouillie aqueuse est de 0,05 à 2 % en poids de s matière active détergente.

7. Procédé pour la lutte contre des plantes adventices, **caractérisé en ce qu'**on applique une quantité efficace herbicide d'une combinaison d'herbicide et d'agent de surface définie à la revendication 1, aux plantes ou à au sol cultivable.

8. Procédé selon la revendication 7, **caractérisée en ce que** le rapport pondéral de l'herbicide à l'agent de surface est de 10:1 à 1:200.

9. Procédé selon la revendication 7 ou 8, **caractérisé en ce qu'**on effectue l'application au moyen d'une bouillie aqueuse, où la concentration en agent de surface est de 0,05 à 2 % en poids.

10. Procédé selon une ou plusieurs des revendications 7 à 9, **caractérisé en ce que** la dose en agent de surface est de 600 à 900 g de matière active détergente à l'hectare de surface cultivable.

11. Procédé selon une ou plusieurs des revendications 7 à 10, **caractérisé en ce qu'**on lutte sélectivement contre les plantes adventices dans des cultures de plantes utiles.
